# EUROPÄISCHE PATENTANMELDUNG

(11) **EP 1 279 982 A2**
(43) Veröffentlichungstag der Anmeldung: **29.01.2003**
(21) Anmeldenummer: 02014901.9
(22) Anmeldetag: 05.07.2002
(51) Int. Cl.: G02B 6/42

(54) **Substrat für eine opto-elektronische Baugruppe**

(30) Priorität: 17.07.2001 DE 10134637
(71) Anmelder: Harting Elektro-optische Bauteile GmbH & Co. KG., 32339 Espelkamp (DE)
(72) Erfinder: Burmeister, Michael, Dr., 32449 Minden (DE); Gerdom, Karl, Dr., 32312 Lübbecke (DE)
(74) Vertreter: Sties, Jochen, Dipl.-Ing.

(57) **Zusammenfassung**

Ein Substrat für eine opto-elektronische Baugruppe, mit mindestens einer Aufnahmestruktur (12) für einen Lichtwellenleiter (14), ist dadurch gekennzeichnet, daß am Substrat (10) mindestens eine Positionierungsstruktur (26) für ein opto-elektronisches Bauelement (30) vorgesehen ist.

## Beschreibung

Die Erfindung betrifft ein Substrat für eine opto-elektronische Baugruppe, mit mindestens einer Aufnahmestruktur für einen Lichtwellenleiter.

Um unter Verwendung eines solchen Substrats einen opto-elektronischen Wandler zu erhalten, muß auf dem Substrat ein opto-elektronisches Bauelement angeordnet werden, beispielsweise eine Sendediode oder eine Empfangsdiode. Diese wird relativ zu der Lichtaustrittsfläche des Lichtwellenleiters, der in der Aufnahmestruktur des Substrats aufgenommen ist, so angeordnet, daß Licht aus dem Lichtwellenleiter auf die aktive Fläche eines als Empfänger dienenden opto-elektronischen Bauelementes fällt bzw. Licht, das von der aktiven Fläche eines als Sender dienenden opto-elektronischen Bauelementes abgegeben wird, in den Lichtwellenleiter eingekoppelt wird.

Um die Verluste zu minimieren, die bei der optischen Kopplung des Lichtwellenleiters mit den opto-elektronischen Bauelementen auftreten, müssen die opto-elektronischen Bauelemente möglichst präzise relativ zur Stirnfläche des Lichtwellenleiters angeordnet werden. Notwendig ist eine Positionsgenauigkeit im Toleranzbereich weniger Mikrometer für alle drei Raumrichtungen. Eine solch exakte Positionierung wird insbesondere dann erforderlich, wenn als opto-elektronische Bauelemente oberflächenempfindliche Empfangsbauelemente und oberflächenemittierende Sendebauelemente, wie vertikal emittierende Laserdioden (VCSEL), verwendet werden. Solche Laserdioden, die durch epitaktische Abscheidungsverfahren hergestellt werden, haben einen kegelförmigen Strahlungsaustritt, der zur Einkopplung in einen optischen Wellenleiter sehr geeignet ist.

Die Aufgabe der Erfindung besteht darin, opto-elektronische Bauelemente mit möglichst hoher Genauigkeit relativ zur Aufnahmestruktur im Substrat und damit relativ zu einem in der Aufnahmestruktur angeordneten Lichtwellenleiter zu positionieren.

Diese Aufgabe wird bei einem Substrat der eingangs genannten Art dadurch gelöst, daß am Substrat mindestens eine Positionierungsstruktur für ein opto-elektronisches Bauelement vorgesehen ist. Die Erfindung beruht allgemein ausgedrückt auf dem Grundgedanken, das opto-elektronische Bauelement passiv durch Positionierungsstrukturen zu positionieren, die einstückig mit dem Substrat ausgebildet sind. Die Positionierungsstrukturen werden somit bei der Herstellung des Substrates in ein und demselben Arbeitsschritt wie die Aufnahmestruktur für den Lichtwellenleiter ausgebildet, so daß die Aufnahmestruktur und die Positionierungsstruktur am Substrat auch bei einer Großserienfertigung immer in demselben räumlichen Bezug zueinander stehen, also keine Toleranzen bezüglich der relativen Lage von Aufnahmestruktur und Positionierungsstruktur auftreten. Zur Herstellung eines solchen Substrates mit Aufnahmestruktur und Positionierungsstruktur sind insbesondere Kunststoff-Abformverfahren geeignet, bei denen das Substrat beispielsweise nach Art einer spritzgegossenen Leiterplatte von einer Gußform abgeformt wird. Ein eventuell hoher Aufwand für die präzise Anordnung von Aufnahmestruktur und Positionierungsstruktur relativ zueinander muß somit nur ein einziges Mal betrieben werden, nämlich für die Herstellung der Gußform.

Als Positionierungsstruktur für das opto-elektronische Bauelement ist insbesondere eine Positionierungsnut mit V-förmigem Querschnitt geeignet. Eine solche Positionierungsstruktur ermöglicht eine Selbstzentrierung des opto-elektronischen Bauelements beim Einsetzen in die Positionierungsstruktur, was die passive Positionierung erleichtert.

Bei einem Substrat, bei dem mehrere Aufnahmestrukturen parallel nebeneinander angeordnet sind, kann jeweils eine Positionierungsstruktur angrenzend an eine Stirnfläche der Aufnahmestruktur angeordnet sein. Bei dieser Gestaltung wird jedes opto-elektronische Bauelement, das einem in der Aufnahmestruktur angeordneten Lichtwellenleiter zugeordnet ist, individuell positioniert. Auf diese Weise ergibt sich eine besonders große Genauigkeit.

Alternativ kann vorgesehen sein, daß beispielsweise nur eine Positionierungsstruktur auf einer Seite der mehreren Aufnahmestrukturen oder daß zwei Positionierungsstrukturen vorgesehen sind, nämlich eine auf der einen Seite der mehreren Aufnahmestrukturen und eine auf der anderen Seite. Diese Gestaltung ist besonders dann geeignet, wenn die opto-elektronischen Bauelemente zu einer Baugruppe zusammengefaßt sind, bei der die einzelnen opto-elektronischen Bauelemente sehr präzise relativ zueinander angeordnet sind. Es ist dann ausreichend, die gesamte Baugruppe durch eine einzige Positionierungsstruktur oder durch zwei Positionierungsstrukturen festzulegen, die seitlich der Aufnahmestrukturen angeordnet ist bzw. sind.

Gemäß einer bevorzugten Ausführungsform sind mehrere Aufnahmestrukturen parallel nebeneinander angeordnet, die in einem durchgehenden Graben zur Aufnahme mehrerer opto-elektronischer Bauelemente münden. In diesen Graben können die opto-elektronischen Bauelemente, insbesondere vertikal emittierende Laserdioden, "stehend" angeordnet werden, also so, daß ihre aktive Oberfläche unmittelbar der Stirnseite einem in der Aufnahmestruktur angeordneten Lichtwellenleiter zugewandt ist. Bei dieser Gestaltung können auf die aus dem Stand der Technik bekannten Spiegel verzichtet werden, die bei der herkömmlichen, "liegenden" Anordnung der opto-elektronischen Bauelemente erforderlich ist, um das von diesen abgestrahlte Licht in den Lichtwellenleiter einzukoppeln, und umgekehrt. Es ergibt sich somit ein besonders platzsparender, flacher Aufbau.

Gemäß einer Ausführungsform der Erfindung ist vorgesehen, daß zusätzlich zur Aufnahmestruktur für den Lichtwellenleiter mindestens eine Führungsstruktur vorgesehen ist, mittels der eine Steckverbinderferrule an dem Substrat angebracht werden kann. Dies ermöglicht es, die Steckverbinderferrule ohne großen Aufwand so am Substrat zu positionieren, daß die Wellenleiter der Ferrule zuverlässig und dämpfungsarm mit den Wellenleitern des Substrates gekoppelt werden.

Vorteilhafte Ausgestaltungen der Erfindung ergeben sich aus den Unteransprüchen.

Die Erfindung wird nachfolgend anhand zweier Ausführungsformen beschrieben, die in den beigefügten Zeichnungen dargestellt sind. In diesen zeigen:
- Figur 1 ein Substrat gemäß einer ersten Ausführungsform mit eingelegten Lichtwellenleitern in einem Schnitt entlang der Ebene I von Figur 3;
- Figur 2 eine perspektivische Ansicht einer Baugruppe von opto-elektronischen Bauelementen;
- Figur 3 einen Längsschnitt durch das Substrat von Figur 1 mit eingelegtem Lichtwellenleiter und angeordnetem opto-elektronischen Bauelement;
- Figur 4 einen Längsschnitt entlang der Ebene IV-IV von Figur 5 durch ein Substrat gemäß einer zweiten Ausführungsform mit angesetzter Steckverbinderferrule;
- Figur 5 eine Draufsicht auf das Substrat und die Steckverbinderferrule von Figur 4; und
- Figur 6 eine perspektivische Schnittansicht entlang der Ebene VI-VI von Figur 5.

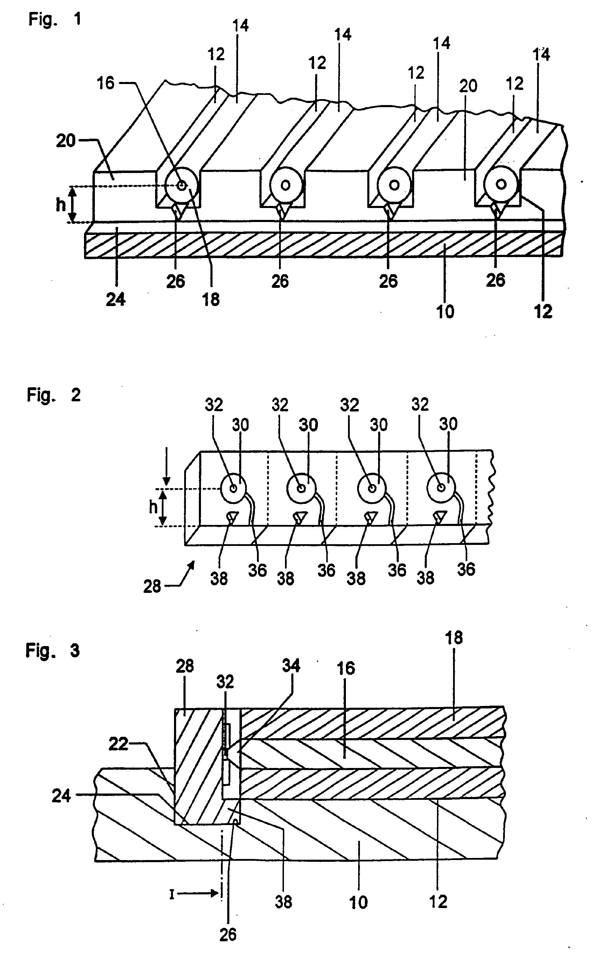

In den Figuren 1 und 3 ist ein Substrat 10 gemäß einer ersten Ausführungsform zu sehen, das mit mehreren parallel angeordneten Aufnahmestrukturen 12 für Lichtwellenleiter versehen ist. Jede Aufnahmestruktur 12 ist hier nach Art einer Aufnahmenut mit quadratischem Querschnitt ausgebildet. Anstelle des quadratischen Querschnittes könnte die Aufnahmenut auch beispielsweise einen V-förmigen Querschnitt haben.

In jeder Aufnahmenut 12 ist ein Lichtwellenleiter angeordnet, der hier als Lichtleitfaser 14 ausgebildet ist. Jede Lichtleitfaser 14 besteht in bekannter Weise aus einem Kern 16 und einer Ummantelung 18. Die Lichtleitfasern können in den Aufnahmestrukturen verklebt sein.

Die Aufnahmestrukturen 12 münden in einem Graben, der gebildet ist durch zwei Seitenwände 20, 22 und einen Boden 24. Der Graben erstreckt sich senkrecht zu der Längsrichtung der Aufnahmestrukturen 12, wobei die Höhe der Seitenwand 22 niedriger ist als die Höhe der Seitenwand 20. Dies ist durch Vergleich der Figuren 1 und 3 zu sehen; die Seitenwand 20 hat eine solche Höhe, daß die Oberseite des Substrates auf der Seite der Lichtwellenleiter etwa bündig mit diesen abschließt, während die Oberseite des Substrates angrenzend an die Seitenwand 22 unterhalb des von den Lichtwellenleitern vorgegebenen Niveaus liegt.

In der Seitenwand 20 des Grabens ist im Bereich der Stirnfläche jeder Aufnahmestruktur 12, also in dem Bereich, in welchem diese in den Graben mündet und die Stirnfläche der in der entsprechenden Aufnahmestruktur angeordneten Lichtleitfaser liegt, eine Positionierungsstruktur 26 vorgesehen, die hier als V-förmige Nut ausgebildet ist. Der Boden der V-förmigen Nut liegt dabei auf demselben Niveau wie der Boden 24 des Grabens im Substrat. Die Lichtleitfasern 14 sind so in den Aufnahmestrukturen 12 angeordnet, daß sie genau bündig mit der in Figur 1 vertikalen Stirnfläche der Positionierungsstruktur 26 abschließt.

Im Graben zwischen den Wänden 20, 22 ist eine Baugruppe 28 (siehe Figur 2) angeordnet, die aus mehreren nebeneinander angeordneten opto-elektronischen Bauelementen 30 besteht. Im dargestellten Beispiel handelt es sich jeweils um eine vertikal emittierende Laserdiode (VCSEL), die durch epitaktische Abscheidungsverfahren hergestellt ist und deren aktive Oberfläche 32 einen kegelförmigen Lichtstrahl 34 (siehe Figur 3) abgeben kann. Zur Kontaktierung ist eine Leiterbahn 36 vorgesehen, die auf der Oberfläche der Baugruppe 28 ausgebildet ist. Eine zweite Leiterbahn erstreckt sich durch die Baugruppe 28 hindurch, so daß die opto-elektronischen Bauelemente 30 von der Rückseite der Baugruppe 28 her kontaktiert werden können.

Jedes opto-elektronische Bauelement 30 ist mit einer Justierstruktur 38 versehen, die hier als Fortsatz mit dreieckigem Querschnitt ausgebildet ist. Der Querschnitt ist komplementär zur Form der V-förmigen Positionierungsstruktur 26. Der Abstand der Justierstrukturen 38 untereinander entspricht dem Abstand der verschiedenen Positionierungsstrukturen 26 im Substrat. Die Höhe h zwischen dem tiefsten Punkt jeder Justierstruktur 38 und dem Mittelpunkt der aktiven Oberfläche 32 jedes opto-elektronischen Bauelementes entspricht dem Abstand h zwischen dem tiefsten Punkt jeder Positionierungsstruktur 26 und dem Mittelpunkt des Kerns 16 jeder Lichtleitfaser 14. Wie in Figur 3 zu sehen ist, ist die Baugruppe 28 so im Graben zwischen den Wänden 20, 22 und auf dem Boden 24 angeordnet, daß die am opto-elektronischen Bauelement 30 angebrachte Justierstruktur 38 in die Positionierungsstruktur 26 im Substrat eingreift. Die aktive Oberfläche 32 jedes opto-elektronischen Bauelementes 30 liegt dabei genau gegenüber der Mitte des Kerns 16 der in den Aufnahmestrukturen 12 angeordneten Lichtleitfasern 14, so daß eine unmittelbare, verlustfreie optische Kopplung gewährleistet ist.

Die Justierstrukturen 38 der opto-elektronischen Bauelemente 30 können, wenn es sich um Halbleiterbauelemente handelt, als unmittelbar in einem epitaktischen Verfahren aufgewachsene Strukturen ausgebildet werden.

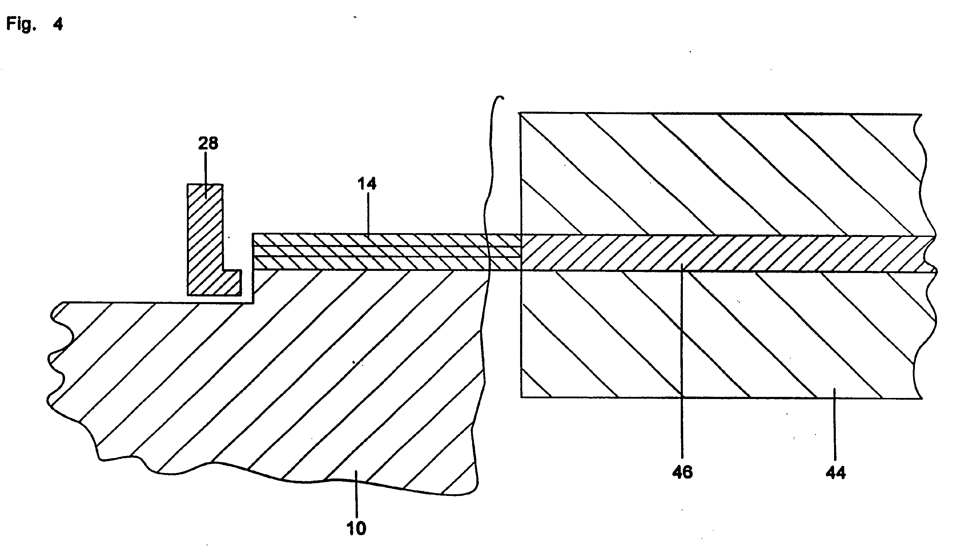

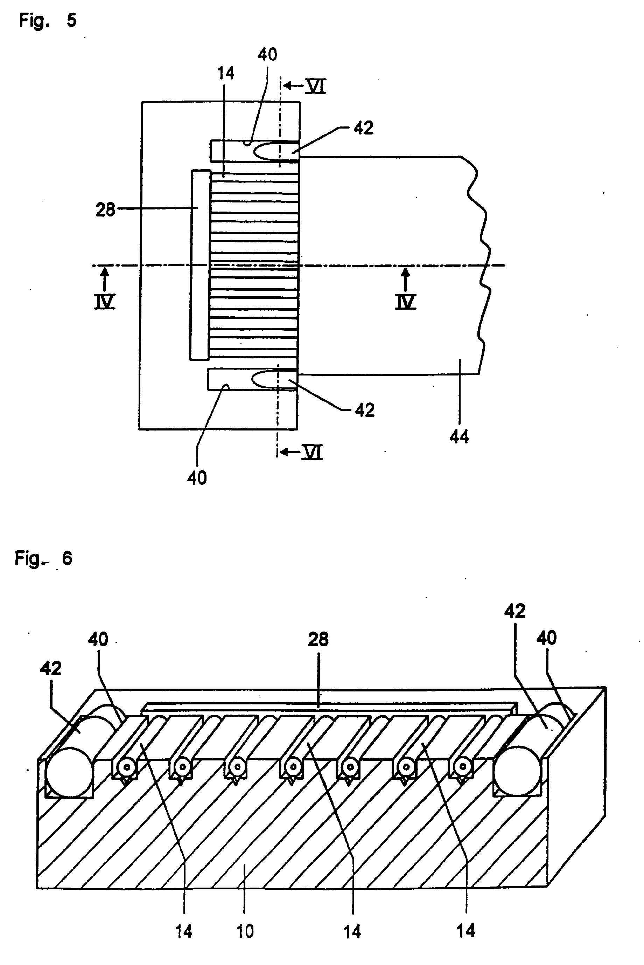

In den Figuren 4 bis 6 ist ein Substrat gemäß einer zweiten Ausführungsform zu sehen. Der Unterschied zur ersten Ausführungsform besteht darin, daß das Substrat 10 zusätzlich zu den Aufnahmestrukturen 12 für die Lichtleitfasern mit zwei Führungsstrukturen 40 versehen ist, die hier aus Nuten mit quadratischem Querschnitt ausgebildet sind. Die Führungsstrukturen 40 dienen zur Aufnahme von Führungsstiften 42, die an einer Steckverbinderferrule 44 ausgebildet sind. Auch die Führungsstrukturen werden mit derselben Genauigkeit relativ zu den Aufnahmestrukturen ausgebildet wie die Positionierungsstrukturen.

Bei der Steckverbinderferrule 44 handelt es sich um eine MT-Steckverbinderferrule, die mit mehreren nebeneinander angeordneten Lichtleitern 46 versehen ist. Der Abstand zwischen den Lichtleitern 46 in der MT-Steckverbinderferrule entspricht dem Abstand zwischen den Lichtleitfasern 14 im Substrat.

Wenn die beiden Führungsstifte 42 der Steckverbinderferrule in die Führungsstrukturen 40 des Substrates 10 eingesteckt werden, werden automatisch die Stirnflächen der Lichtleiter 46 der Steckverbinderferrule mit den Stirnflächen der Lichtleitfasern 14 im Substrat ausgerichtet, so daß sich eine zuverlässige und dämpfungsarme optische Kopplung zwischen der Steckverbinderferrule und den Lichtleitfasern des Substrates und somit den opto-elektronischen Bauelementen 30 ergibt.

### Bezugszeichenliste:

- 10:: Substrat
- 12:: Aufnahmestruktur
- 14:: Lichtleitfaser
- 16:: Kern
- 18:: Ummantelung
- 20:: Seitenwand
- 22:: Seitenwand
- 24:: Boden
- 26:: Positionierungsstruktur
- 28:: Baugruppe opto-elektronischer Bauelemente
- 30:: Opto-elektronisches Bauelement
- 32:: aktive Oberfläche
- 34:: Lichtstrahl
- 36:: Leiterbahn
- 38:: Justierstruktur
- 40:: Führungsstruktur
- 42:: Führungsstift
- 44:: Steckverbinderferrule
- 46:: Lichtleiter

## Patentansprüche

1. Substrat für eine opto-elektronische Baugruppe, mit mindestens einer Aufnahmestruktur (12) für einen Lichtwellenleiter (14), **dadurch gekennzeichnet, daß** am Substrat (10) mindestens eine Positionierungsstruktur (26) für ein opto-elektronisches Bauelement (30) vorgesehen ist.

2. Substrat nach Anspruch 1, **dadurch gekennzeichnet, daß** die Aufnahmestruktur (12) aus einer Aufnahmenut besteht.

3. Substrat nach Anspruch 1 oder Anspruch 2, **dadurch gekennzeichnet, daß** die Positionierungsstruktur (26) aus einer Positionierungsnut besteht.

4. Substrat nach Anspruch 3, **dadurch gekennzeichnet, daß** die Positionierungsnut (26) einen V-förmigen Querschnitt hat.

5. Substrat nach einem der vorhergehenden Ansprüche, **dadurch gekennzeichnet, daß** mehrere Aufnahmestrukturen (12) parallel nebeneinander angeordnet sind, die in einen durchgehenden Graben (20, 22, 24) zur Aufnahme mehrerer opto-elektronischer Bauelemente münden.

6. Substrat nach einem der vorhergehenden Ansprüche, **dadurch gekennzeichnet, daß** die Positionierungsstruktur (26) angrenzend an eine Stirnfläche der Aufnahmestruktur (12) angeordnet ist.

7. Substrat nach einem der Ansprüche 1 bis 5, **dadurch gekennzeichnet, daß** die Positionierungsstruktur (26) seitlich einer Stirnfläche der Aufnahmestruktur angeordnet ist.

8. Substrat nach einem der vorhergehenden Ansprüche, **dadurch gekennzeichnet, daß** ein opto-elektronisches Bauelement (30) vorgesehen ist, das mit einer Justierstruktur (38) versehen ist, die in die Positionierungsstruktur (26) des Substrats (10) eingreift.

9. Substrat nach Anspruch 8, **dadurch gekennzeichnet, daß** das opto-elektronische Bauelement (30) ein oberflächen-empfindliches Empfangselement ist.

10. Substrat nach Anspruch 8, **dadurch gekennzeichnet, daß** das opto-elektronische Bauelement (30) ein oberflächen-emittierendes Sendeelement ist.

11. Substrat nach einem der Ansprüche 8 bis 10, **dadurch gekennzeichnet, daß** mehrere opto-elektronische Bauelemente (30) vorgesehen sind, die zu einer Baugruppe (28) zusammengefaßt sind.

12. Substrat nach einem der Ansprüche 8 bis 11, **dadurch gekennzeichnet, daß** die aktive Oberfläche (32) der opto-elektronischen Bauelemente (30) direkt in die Stirnfläche von Lichtwellenleitern (14), die in den Aufnahmestrukturen (12) angeordnet sind, einstrahlt bzw. von dieser direkt bestrahlt wird.

13. Substrat nach einem der vorhergehenden Ansprüche, dadurch ekennzeichnet, daß zusätzlich zur Aufnahmestruktur (12) für den Lichtwellenleiter mindestens eine Führungsstruktur (40) vorgesehen ist, mittels der eine Steckverbinderferrule (46) an dem Substrat (10) angebracht werden kann.

14. Substrat nach Anspruch 13, **dadurch gekennzeichnet, daß** die Steckverbinderferrule eine MT-Steckverbinderferrule (46) ist und zwei parallel zueinander ausgerichtete Führungsstrukturen (40) am Substrat (10) vorgesehen sind.

15. Substrat nach einem der vorhergehenden Ansprüche, **dadurch gekennzeichnet, daß** das Substrat (10) aus Kunststoff besteht und in einem Abformverfahren hergestellt ist.
